# EUROPEAN PATENT SPECIFICATION

(11) **EP 1 601 140 B1**
(45) Date of publication and mention of the grant of the patent: **22.02.2017**
(21) Application number: 05076248.3
(22) Date of filing: 27.05.2005
(51) Int. Cl.: H04L 12/713, H04L 12/721, H04L 12/701

(54) **Method of monitoring a member router in a VRRP group**
Verfahren zur Überwachung eines Teilnehmer-Routers in einer VRRP-Gruppe
Procédé pour contrôler un routeur membre dans un groupe VRRP

(30) Priority: 29.05.2004 GB 0412073
(43) Date of publication of application: 30.11.2005
(73) Proprietor: Digi International Limited, Leatherhead Surrey KT22 8DP (GB)
(72) Inventor: Hood, Andrew P.T., Harden, West Yorkshire BD16 1LQ (GB); Nisbet, Christopher B., Dannemora, Auckland (NZ); Monaghan, Nicholas L., Howick, Auckland (NZ)
(74) Representative: Marks & Clerk Incorporating Edward Evans Barker

(56) References cited:
- WO-A1-95/29544
- US-A- 5 815 668
- US-A1- 2002 010 750
- HINDEN R ET AL: "Virtual Router Redundancy Protocol (VRRP); rfc3768.txt" IETF STANDARD, INTERNET ENGINEERING TASK FORCE, IETF, CH, 1 April 2004 (2004-04-01), XP015009548 ISSN: 0000-0003

## Description

This invention relates to methods for monitoring member routers in VRRP (virtual router redundancy protocol) groups. The invention also relates to routers and router systems utilising such methods.

In VRRP groups, a number of distinct routers (member routers) are connected together and to a network in such a way that the network effectively sees only one router while the group provides a redundant system such that when a functional router (master router) fails, another member of the group (backup router) takes over the routing function and the network continues to function.

The VRRP protocol is defined in the Internet Society's Request For Comments Nos. 2338 (April 1998) and 3768 (April 2004).

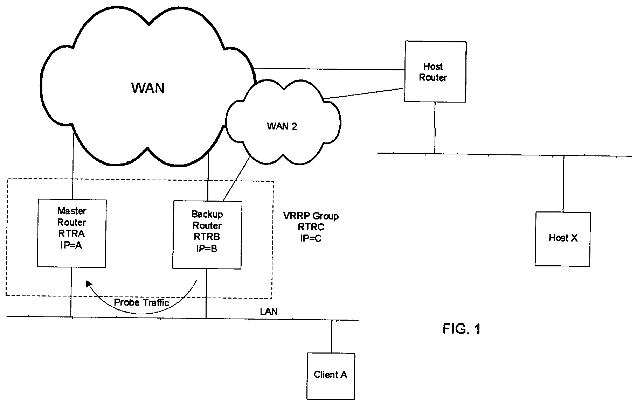

FIG. 1 shows a typical network diagram showing the paths IP packets from Client A may traverse in reaching Host X. The master router RTRA and the backup router RTRB work together using the VRRP protocol to present themselves to Client A (and any other IP devices on the LAN) as if they are just a single gateway RTRC. Client A is statically configured to use the IP address of RTRC as the single gateway for traffic to reach Host X. Thus Client A uses either RTRA or RTRB as the gateway depending on whichever router is currently the master at the time. Client A is not aware of which router is currently the master, in fact it does not need to know. RTRA and RTRB will determine which the currently active router is by using the virtual routing redundancy protocol (VRRP). In FIG. 1, only two routers RTRA, RTRB are shown. It is possible that more than two routers can be provided in order to provide multiple redundancy.

In use, one member router of the VRRP group, e.g. RTRA is active (the master router) at a given time, the remaining member(s) RTRB being inactive (backup members) but providing redundant routing functionality in the event of failure of the master. Each member of the group has an assigned priority. The software in the system operates to assign the task of master router to the functional member router with the highest priority. In the event of failure of the master router, the system makes that member inactive and assigns the master function to the active router with the next highest assigned priority.

US 6 108 300 proposes a router system in which a primary server and a backup server periodically confirm to each other that they have not failed. When one or other does not receive such confirmation, the server in question enters a test mode to determine where a failure has occurred that has caused the confirmation to be missed. One element of the test mode is to listen for network traffic to determine which server has failed and so which server is to be made active and which one is to be made inactive. As long as the correct confirmation signals are received by each server, no failure will be detected, even if there is a failure outside the server that affects its interaction with the network.

Each physical router in a VRRP group typically has a series of ports for connection to the LAN and WAN. The functioning of some of these ports is directly related to the functioning of the VRRP group. Other ports, while being a functional part of the router, are not within the VRRP protocol.

EP 1 006 702 proposes a VRRP system that provides the ability to transition a port associated with a VRRP finite state machine from a master state to a backup state in the event of a failure of another port not associated with the VRRP finite state machine. Such a system only detects failures of ports in the routers. Failures downstream of the router will not necessarily be detected.

US5815668 proposes a master and slave router in a LAN connection system wherein the slave router can change its address to that of the master when the master router fails thus taking over the routing operation.

US2002/0010750 proposes that the slave router becomes a master router using a "fail-over" mechanism when the master becomes defective. WO95/29544 relates to a system and a method for routing data packets from a host on a LAN by means of a virtual address belonging to a plurality of routings. If one of the routers becomes inoperative, a standby router will emulate a new router.

It is an object of the present invention to provide a VRRP group in which a backup member can check detect failures downstream of a master router.

The invention is in the router of claim 1 and the method of claim 4.

the ability of the system to connect the client to the host via the master router; and on detection of a failure of the system, causing the backup router to assume the role of the master router for connecting the client to the host by incrementing an internal priority in the backup router so as to be greater than the corresponding internal priority of the master router
wherein the router acts as a client, and sends signals to and receives signals from the host via the master router to determine the ability of the system to connect the client to the host via the master router.

Preferably, the backup router detects a failure if, following sending a signal over the network, no response is detected within a predetermined period of time. The backup router can be arranged to assume the role of the master router following a predetermined number of failure detections.

Restoration of the role of the master router typically follows reception of a predetermined number of signals indicating resumption of the ability of the master router to connect the client to the host.
backup router in normal use, the method comprising: periodically sending signals from the backup router across the network via the master router; detecting signals returned to the backup router across the network via the master router; comparing sent and received signals to detect failure of the ability of the system to connect the client to the host via the master router; and on detection of a failure of the system, causing the backup router to assume the role of the master router for connecting the client to the host by incrementing an internal priority in the backup router so as to be greater than the corresponding internal priority of the master router
wherein the router acts as a client, and sends signals to and receives signals from the host via the master router to determine the ability of the system to connect the client to the host via the master router.

Preferably, the backup router detects a failure if, following sending a signal over the network, no response is detected within a predetermined period of time. The backup router can be arranged to assume the role of the master router following a predetermined number of failure detections.

Restoration of the role of the master router typically follows reception of a predetermined number of signals indicating resumption of the ability of the master router to connect the client to the host.
This provides redundancy in the event that a failure is in the WAN, or a failure is in the connection of the master router RTRA to the WAN. This alternate path on WAN2 is only available if RTRB becomes the master router, and hence the improvement in backup and redundancy with the use of this invention.

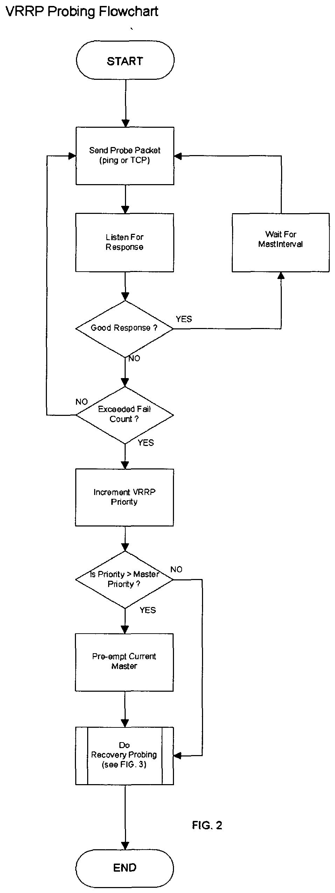

FIG. 2 shows the VRRP probing method when RTRA is the master router and RTRB, which is implementing this VRRP probing, is currently the backup router.

Probing operation is commenced by sending some traffic from the backup router RTRB to probe the master router RTRA ("Send Probe Packet (ping or TCP)"). This traffic must be sent to RTRA and so the unique IP address RTRA is used which is IP Address A as shown in FIG. 1. The traffic can be any IP datagram that will solicit a response from the addressed host Host X, for example either an ICMP ping packet or a TCP packet. Following this, router RTRB waits for a response ("Listen For Response"). In the case of an ICMP ping echo request being sent, the expected reply is an ICMP echo response. In the case of a TCP packet being sent, the packet would be a TCP packet with the SYN flag set on a known port by the host. This will have the effect of opening a TCP socket connection and so the expected response to such a packet would be a TCP packet with the SYN and ACK flag set on that same port from the addressed host. If the correct response is received from the host then a TCP socket is considered to be in the connected state, and then this TCP socket connection is immediately closed by sending a TCP packet to the host with the FIN flag set to terminate the socket connection.

If a good response is received to the stimulus to the host ("Good Response?") then a period of time is allowed to elapse ("Wait For MastInterval") before the probing traffic is transmitted again. This time is referred to in the flow chart as a parameter labelled as "MastInterval" and a typical period might be 3 minutes. If a good response is not received within the response time then the probe packet is retransmitted. The response time is defined as the maximum time provided for the response packet to be received from the host. A typical value for this might be 30 seconds.

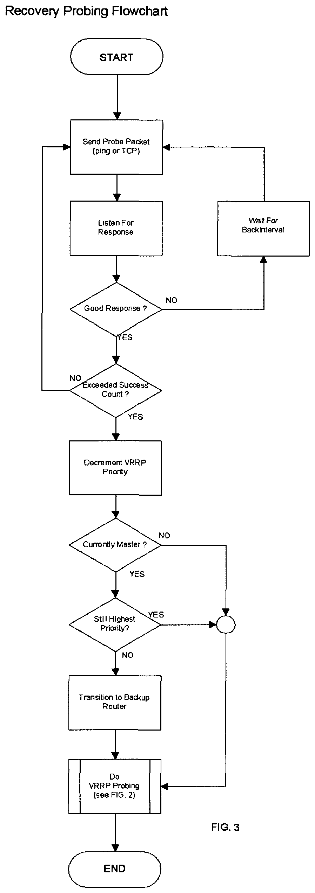

If a good response is not received after several consecutive attempts to solicit a response from the host ("Exceed Fail Count?") it will be determined that the current master router (RTRA in the network shown in FIG .1) is not successfully routing data grams to the host. This number of attempts to solicit a result is a parameter labelled as "Fail Count" in the flow chart in FIG 2. A typical value for this parameter would be a value of three. After this count has been exceeded then this router will increment its VRRP priority ("Increment VRRP Priority") and the check this new value of VRRP priority against the VRRP priority of the current master router ("Is Priority > Master Priority?). Normally in VRRP the priorities do not change and the backup takes over when the current master becomes unavailable (or decides to be unavailable). Adjusting the current VRRP priority allows a current backup router that is implementing this invention to pre-empt a current master router that is implementing normal VRRP ("Pre-empt Current Master"). The master router is pre-empted by the current backup router transmitting a VRRP ADVERTISEMENT packet indicating the new priority on the LAN according to the VRRP protocol. Upon assuming the master router function, the router RTRB commences recovery probing ("Do Recovery Probing (see FIG. 3)").

FIG. 3 shows the VRRP probing method when RTRA is currently the backup router and RTRB, which is implementing this VRRP probing method, is currently the master router.

When the route provided by the original master router is considered to be unavailable following the use of this method and the original backup router has pre-empted the original master router to become the current master router, the original master router is constantly probed to check for its recovery.

The probe traffic is sent to RTRA ("Send Probe Packet (ping or TCP)") and so the unique IP address of RTRA is used which is IP Address A as shown in FIG. 1. Following this, router RTRB waits for a response ("Listen For Response"). If no good response is received ("Good Response?"), a period of time is allowed to elapse ("Wait For BackInterval") before probing traffic is sent again. When several consecutive correct responses are received ("Exceed Success Count?"), the normally master router RTRA is considered to be available again. When this happens the normally master router RTRA, which is currently the backup router, is allowed to become the master router again. This is achieved by decrementing a value from the local VRRP priority of the currently master (normally backup) router RTRB ("Decrement VRRP Priority"). If RTRB is currently master ("Currently Master?") its priority is checked against that of the other router ("Still Highest Priority?"). If the decrement results in the priority being lower than that of the other router RTRA, the router RTRB resumes its backup function ("Transition to Backup Router") and transmits this in a VRRP ADVERTISEMENT packet on the LAN. The normally master router (RTRA) will receive this packet and then pre-empt the current master router RTRB to transition to become the master router. At this point, the backup router will continue probing as before ("Do VRRP Probing(see FIG. 2)").

Because this method can be applied to many network topologies and different applications the following parameters are provided as examples which can be adjusted according to requirements:

| Parameter | Description | Typical Value |
|---|---|---|
| ProbeTraffic | Defines the type of probing traffic. A ping packet or TCP/SYN packets are typical as they have an expected response from the host. | Ping |
| ResponseTime | Time allowed for a response packet to be received after transmission of a probing packet. | 30 |
| BackInterval | Time between consecutive probe transmissions when the normally master router is currently in the backup state and there are not any good responses. | 1 min |
| MastInterval | Time between consecutive probe transmissions when the normally master router is currently the master and good responses to the probe traffic is being received. | 3 min |
| SuccessCount | Number of consecutive successful receptions before transitioning from master router to the normal state of backup router. | 3 |
| FailureCount | Number of consecutive bad receptions before pre-empting the normally master router. | 3 |
| PriorityAdjustment | The amount to add to the local VRRP | 10 |
| | priority when it is detected that the master router is unavailable, and also is the amount to deduct from the local VRRP priority when it is detected the master router becomes available. | |

It will be appreciated that other changes can be made while still staying within the scope of the invention.

## Claims

1. A first router (RTRB) configured to operate in a Virtual Router Redundancy Protocol, VRRP, router system for connecting a client to a host via a network, the VRRP router system also including a second router (RTRA) having a VRRP priority, and wherein the first router has a VRRP priority that is lower than that of the second router in normal use when the second router is acting in a role of a master router, wherein the first router is configured to do the following when the first router is currently acting in a role of a backup router:
(a) periodically send and receive signals across the network via the second router to determine the ability of the system to connect the client to the host via the second router; and
(b) on detection of a failure of the system, assume the role of the master router for connecting the client to the host by incrementing an internal priority so as to be greater than the corresponding internal priority of the second router,
wherein the first router, when currently acting in the role of the backup router, acts as a client, sending signals to and receiving signals from the host via the second router to determine the ability of the system to connect the client to the host via the second router.

2. A first router as claimed in claim 1, wherein following assumption of the role of the master router, the first router is configured to:
(a) periodically send and receive signals across the network via the second router to detect resumption of the ability of the system to connect the client to the host via the second router; and
(b) on detection of resumption, restore the second router to acting in the role of the master router for connecting the client to the host.

3. A router system comprising the first router and the second router as claimed in claim 1 or 2.

4. A method of transitioning a first router (RTRB) from acting in a role of a backup router to acting in a role of a master router in a VRRP router system for connecting a client to a host over a network, the VRRP router system also including a second router (RTRA) having a VRRP priority higher than the VRRP priority of the first router in normal use when the second router is acting in the role of the master router, the method comprising doing the following when the first router is acting in the role of the backup router:
(a) periodically sending signals from the first router across the network via the second router and detecting signals returned to the first router across the network via the second router; and
(b) on detection of a failure of the system, causing the second router to assume the role of the master router for connecting the client to the host by incrementing an internal priority in the first router so as to be greater than the corresponding internal priority of the second router,
wherein the first router acts as a client, and sends signals to and receives signals from the host via the second router to determine the ability of the system to connect the client to the host via the second router.

5. A method as claimed in claim 4, wherein the first router detects a failure if, following sending a signal over the network, no response is detected within a predetermined period of time.

6. A method as claimed in claim 4 or 5, comprising causing the first router to assume the role of the master router following a predetermined number of failure detections.

7. A method as claimed in any of claims 4 to 6, comprising, following assumption of the role of the master router by the first router:
(a) periodically sending signals from the first router across the network via the second router and detecting signals retuned to the first router across the network via the second router; and
(b) on detection of resumption, restoring the second router to acting in the role of the master router for connecting the client to the host.

8. A method as claimed in claim 7, comprising restoring the second router to acting in the role of the master router following reception by the first router of a predetermined number of signals indicating resumption of the ability of the second router to connect the client to the host.

## Patentansprüche

1. Erster Router (RTRB), konfiguriert für den Betrieb in einem VRRP(virtuelles Router-Redundanzprotokoll)-Routersystem zum Anschließen eines Clients an einen Host über ein Netz, wobei das VRRP-Routersystem auch einen zweite Router (RTRA) mit einer VRRP-Priorität einschließt und worin der erste Router eine VRRP-Priorität hat, die niedriger ist als die des zweiten Routers bei normaler Verwendung, wenn der zweite Router in einer Rolle eines Master-Routers agiert, worin der erste Router dazu konfiguriert ist, Folgendes auszuführen, wenn der erste Router gegenwärtig in einer Rolle eines Backup-Routers agiert:
(a) periodisches Senden und Empfangen von Signalen durch das Netz über den zweiten Router, um die Fähigkeit des Systems zu bestimmen, den Client über den zweiten Router an den Host anzuschließen; und
(b) nach Detektieren eines Ausfalls des Systems die Rolle des Master-Routers annehmen, um den Client durch Inkrementieren einer internen Priorität an den Host anzuschließen, damit sie größer ist als die entsprechende interne Priorität des zweiten Routers,
worin der erste Router, wenn er gegenwärtig in der Rolle des Backup-Routers agiert, als ein Client agiert, wobei er über den zweiten Router Signale an den Host sendet und von diesem empfängt, um die Fähigkeit des Systems zu bestimmen, den Client über den zweiten Router an den Host anzuschließen.

2. Erster Router nach Anspruch 1, worin, der Annahme der Rolle als der Master-Router folgend, der erste Router konfiguriert ist zum:
(a) periodischen Senden und Empfangen von Signalen durch das Netz über den zweiten Router, um den Wiederbeginn der Fähigkeit des Systems zu detektieren, den Client über den zweiten Router an den Host anzuschließen; und
(b) nach Detektieren eines Wiederbeginns das Zurückbringen des zweiten Routers zum Agieren in der Rolle des Master-Routers wiedereinzusetzen, um den Client an den Host anzuschließen.

3. Routersystem, den ersten Router und den zweiten Router nach Anspruch 1 oder 2 umfassend.

4. Verfahren zum Umwechseln eines ersten Routers (RTRB) vom Agieren in einer Rolle eines Backup-Routers zum Agieren in einer Rolle eines Master-Routers in einem VRRP-Routersystem zum Anschließen eines Clients an einen Host über ein Netz, wobei der VRRP-Router auch einen zweiten Router (RTRA) mit einer VRRP-Priorität einschließt, die höher ist als die VRRP-Priorität des ersten Routers bei normaler Verwendung, wenn der zweite Router in der Rolle des Master-Routers agiert, wobei das Verfahren das Ausführen von Folgendem umfasst, wenn der erste Router in der Rolle des Backup-Routers agiert:
(a) periodisches Senden von Signalen vom ersten Router durch das Netz über den zweiten Router und Detektieren von Signalen, die durch das Netz über den zweiten Router an den ersten Router zurückgeleitet werden; und
(b) nach Detektieren eines Ausfalls des Systems den zweiten Router veranlassen, die Rolle des Master-Routers zum Anschließen des Clients an den Host anzunehmen, indem eine interne Priorität im ersten Router inkrementiert wird, um größer zu sein als die entsprechende interne Priorität des zweiten Routers,
worin der erste Router als ein Client agiert und Signale über den zweiten Router an den Host sendet und vom Host empfängt, um die Fähigkeit des Systems zu bestimmen, den Client über den zweiten Router an den Host anzuschließen.

5. Verfahren nach Anspruch 4, worin der erste Router einen Ausfall detektiert, falls nach dem Senden eines Signals über das Netz innerhalb einer vorgegebenen Zeitperiode keine Antwort detektiert wird.

6. Verfahren nach Anspruch 4 oder 5, umfassend, dass der erste Router veranlasst wird, nach einer vorgegebenen Anzahl von Ausfällen die Rolle des Master-Routers zu übernehmen.

7. Verfahren nach einem der Ansprüche 4 bis 6, das nach Annahme der Rolle des Master-Routers durch den ersten Router das Folgende umfasst:
(a) periodisches Senden von Signalen vom ersten Router durch das Netz über den zweiten Router und Detektieren von Signalen, die durch das Netz über den zweiten Router an den ersten Router zurückgeleitet werden; und
(b) nach Detektieren von Wiederbeginn die Wiederherstellung des zweiten Routers zum Agieren in der Rolle des Master-Routers zum Anschließen des Clients an den Host.

8. Verfahren nach Anspruch 7, das Zurückbringen des zweiten Routers zum Agieren in der Rolle des Master-Routers nach Empfang durch den ersten Router einer vorgegebenen Anzahl von Signalen umfassend, die den Wiederbeginn der Fähigkeit des zweiten Routers anzeigt, den Client an den Host anzuschließen.

## Revendications

1. Premier routeur (RTRB) configuré pour fonctionner dans un système de routeurs de protocole de redondance de routeur virtuel, VRRP, pour connecter un client à un hôte par l'intermédiaire d'un réseau, le système de routeurs VRRP comprenant également un deuxième routeur (RTRA) ayant une priorité de VRRP, et dans lequel le premier routeur a une priorité de VRRP qui est inférieure à celle du deuxième routeur en utilisation normale lorsque le deuxième routeur a un rôle de routeur maître, dans lequel le premier routeur est configuré pour effectuer les actions suivantes lorsque le premier routeur a actuellement un rôle de routeur de secours :
(a) envoyer et recevoir périodiquement des signaux à travers le réseau par l'intermédiaire du deuxième routeur pour déterminer la capacité du système à connecter le client à l'hôte par l'intermédiaire du deuxième routeur ; et
(b) lors de la détection d'une défaillance du système, assumer le rôle du routeur maître pour connecter le client à l'hôte en incrémentant une priorité interne de manière à ce qu'elle soit supérieure à la priorité interne correspondante du deuxième routeur,
dans lequel le premier routeur, lorsqu'il a actuellement le rôle du routeur de secours, agit en tant que client, envoyant des signaux à l'hôte et recevant des signaux de l'hôte par l'intermédiaire du deuxième routeur pour déterminer la capacité du système à connecter le client à l'hôte par l'intermédiaire du deuxième routeur.

2. Premier routeur selon la revendication 1, dans lequel, à la suite de l'appropriation du rôle du routeur maître, le premier routeur est configuré pour :
(a) envoyer et recevoir périodiquement des signaux à travers le réseau par l'intermédiaire du deuxième routeur pour détecter la récupération de la capacité du système à connecter le client à l'hôte par l'intermédiaire du deuxième routeur ; et
(b) lors de la détection de la récupération, rétablir le deuxième routeur dans le rôle du routeur maître pour connecter le client à l'hôte.

3. Système de routeurs comprenant le premier routeur et le deuxième routeur selon la revendication 1 ou 2.

4. Procédé de transition d'un premier routeur (RTRB) d'un rôle d'un routeur de secours à un rôle d'un routeur maître dans un système de routeurs VRRP pour connecter un client à un hôte sur un réseau, le système de routeurs de VRRP comprenant également un deuxième routeur (RTRA) ayant une priorité de VRRP supérieure à la priorité de VRRP du premier routeur en utilisation normale lorsque le deuxième routeur a le rôle du routeur maître, le procédé comprenant l'exécution des actions suivantes lorsque le premier routeur a le rôle du routeur de secours :
(a) envoyer périodiquement des signaux à partir du premier routeur à travers le réseau par l'intermédiaire du deuxième routeur et détecter les signaux renvoyés au premier routeur à travers le réseau par l'intermédiaire du deuxième routeur ; et
(b) lors de la détection d'une défaillance du système, amener le deuxième routeur à assumer le rôle du routeur maître pour connecter le client à l'hôte en incrémentant une priorité interne dans le premier routeur de manière à ce qu'elle soit supérieure à la priorité interne correspondante du deuxième routeur,
dans lequel le premier routeur agit en tant que client, et envoie des signaux à l'hôte et reçoit des signaux de l'hôte par l'intermédiaire du deuxième routeur pour déterminer la capacité du système à connecter le client à l'hôte par l'intermédiaire du deuxième routeur.

5. Procédé selon la revendication 4, dans lequel le premier routeur détecte une défaillance si, à la suite de l'envoi d'un signal sur le réseau, aucune réponse n'est détectée pendant une période de temps prédéterminée.

6. Procédé selon la revendication 4 ou 5, comprenant le fait d'amener le premier routeur à assumer le rôle du routeur maître à la suite d'un nombre prédéterminé de détections de défaillance.

7. Procédé selon l'une quelconque des revendications 4 à 6, comprenant, à la suite de l'appropriation du rôle du routeur maître par le premier routeur :
(a) l'envoi périodiquement de signaux du premier routeur à travers le réseau par l'intermédiaire du deuxième routeur et la détection des signaux renvoyés au premier routeur à travers le réseau par l'intermédiaire du deuxième routeur ; et
(b) lors de la détection de la récupération, le rétablissement du deuxième routeur dans le rôle du routeur maître pour connecter le client à l'hôte.

8. Procédé selon la revendication 7, comprenant le rétablissement du deuxième routeur dans le rôle du routeur maître à la suite de la réception par le premier routeur d'un nombre prédéterminé de signaux indiquant la récupération de la capacité du deuxième routeur à connecter le client à l'hôte.
